(19) Europäisches Patentamt
European Patent Office
Office européen des brevets

(11) Publication number: **0 147 683**
**B1**

# (12) EUROPEAN PATENT SPECIFICATION

(45) Date of publication of patent specification: **30.08.89**

(21) Application number: **84114738.2**

(22) Date of filing: **04.12.84**

(51) Int. Cl.$^4$: **A 01 N 47/12,** A 01 N 47/16, A 01 N 47/18

## (54) A method for the control of Galium Aparine.

(30) Priority: **05.12.83 US 557993**
**13.02.84 US 579325**

(43) Date of publication of application:
**10.07.85 Bulletin 85/28**

(45) Publication of the grant of the patent:
**30.08.89 Bulletin 89/35**

(84) Designated Contracting States:
**AT BE CH DE FR GB IT LI NL SE**

(56) References cited:
**WO-A-83/00329**
**DE-A-2 131 928**
**FR-A-2 196 119**
**US-A-2 992 091**
**US-A-3 144 475**
**US-A-3 582 314**
**US-A-3 929 452**
**US-A-4 004 914**

**Central Patents Index, Basic Abstracts Journal, Section C, Week A 16, 1978, Ref. no. 29339 A/16, Derwent Publications London**

**The file contains technical information submitted after the application was filed and not included in this specification**

(73) Proprietor: **STAUFFER CHEMICAL COMPANY**
**Westport Connecticut 06880 (US)**

(72) Inventor: **Mojica, Ellen Yurcak**
**845 Sunnyoaks Avenue**
**Campbell California 95008 (US)**

(74) Representative: **Jaeger, Klaus, Dipl.-Chem. Dr. et al**
**Jaeger, Steffens & Köster Patentanwälte**
**Pippinplatz 4a**
**D-8035 München-Gauting (DE)**

**EP 0 147 683 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The protection of crops from weeds and other vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

One such class of compounds is the thiolcarbamates. Thiolcarbamates in general are disclosed as herbicides in US 3 185 720 A (Tilles et al., May 25, 1965), US 3 198 786 A (Tilles et al., August 3, 1965) and US 2 913 327 A (Tilles et al., November 17, 1959).

The present invention resides in the discovery that S-benzyl-N,N-di-n-propyl thiolcarbamate has exceptional herbicidal activity for use in connection with Galium aparine weed species.

S-benzyl thiolcarbamates are disclosed as suitable for use as herbicides in US 3 144 475 A (Harman, et al., August 11, 1964), US 2 992 091 A (Harman et al., July 11, 1961) and US 3 207 775 A (September 21, 1965).

JP 5 324 020 A describes a synergistic herbicidal composition for usage in paddy rice fields comprising a mixture of S-(4-chlorobenzyl)-N,N-diethyl thiolcarbamate (A) and a compound of formula (B):

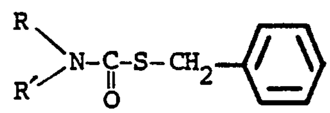

(B)

R, R′ = lower alkyl groups.

Therein it is disclosed that compound (B) is known to have herbicidal effect; however, it injures paddy rice in a dosage sufficient to exert sufficiently the herbicidal effect and therefore is not practically used. It has been found that a mixture of the compound (A) and a small amount of the compound (B) shows a synergistic effect and does not adversely affect paddy rice.

Therefore, the mixture of compounds (A) and (B) showing a synergistic effect is the subject matter of JP 5 324 020 A.

In contrast thereto, it now has been discovered that S-benzyl-N,N-di-n-propyl thiolcarbamate can be used as a single compound in a dosage sufficient to exert the desired herbicidal effect against Galium aparine weed species without damaging the crops (especially wheat and barley).

Furthermore, this compound shows a surprisingly higher herbicidal activity than the closest structurally related compond, namely the diisopropyl derivative.

S-benzyl-N,N-di-n-propyl thiolcarbamate can be prepared by the procedures described in the patents mentioned above (US 2 913 327 A, US 3 185 720 A and US 3 198 786 A).

While S-benzyl-N,N-di-n-propyl thiolcarbamate has some herbicidal activity against a wide variety of weed species, it is particularly effective against those weed species appearing in and around oilseed rape, sugarbeets, barley and wheat.

Accordingly, therefore, the method of this invention is a method of controlling Galium aparine in the presence of, for example, oilseed rape, sugarbeet, barley and wheat crop plants which comprises applying to the locus where control is desired a herbicidally effective amount of S-benzyl-N,N-di-n-propyl thiolcarbamate, preferably mixtured within an inert diluent carrier.

The herbicide can be applied in either pre-emergent or post-emergent techniques. By pre-emergent it is meant prior to the eruption of plant or weed species from the soil, and by post-emergent it is meant subsequent to the eruption of plant or weed species from the soil.

The term "herbicidally effective amount" is used to indicate the quantity of such a compound or combination of such compounds which is capable of producing a controlling or modifying effect. Controlling or modifying effects include all deviations from natural development, for example: killing, retardation, leaf burn and dwarfing. The term "plants" is used to include all post-emergent vegetation, ranging from seedlings to established vegetation.

Application rates will depend upon the degrees of control desired.

In general, the compound of this invention is most efficiently employed at a rate of 0.01 to 50 pounds per acre (0.011 to 56 kilograms per hectare) of the active ingredient, preferably 0.1 to 25 pounds per acre (0.11 to 28 kilograms per hectare).

Examples

The following examples provide further illustrations demonstrating the herbicidal response of the present compound.

Loamy sand soil is treated with 75 ppm Captan and 50 ppm 17—17—17 fertilizer. 1080 or 1960 $cm^3$ aluminum pans (flats) are filled with soil to a depth of about 5 cm. Seeds, or sometimes botanical parts capable of vegetatively reproducing, are placed in furrows, and covered with soil. The soil is leveled and tamped firm.

Flats to be treated with a pre-emergence spray are seeded the day prior to, or on the day of, treatment.

A 1:1 ratio of acetone:water is added to the technical grade compound to form a spray solution. A 60 $cm^3$ solution is commonly used. Only water is used to dilute formulated products. Polyoxyethylene sorbitan monolaurate (Tween 20®) is routinely added to the acetone at a concentration of 1%.

Spray solutions are delivered to the soil surface or foliage by use of a linear spray table operated at 210 kPa pressure. Flats are immediately placed in a greenhouse after spraying. Pre-emergence flats are watered from overhead. Greenhouse air temperatures may range from 15°C to 24°C. Whitewash is maintained on the glazing year around. The whitewash reduces the light intensity from the sun by about one-half. A cool and shady environment is maintained in the greenhouse in order to simulate the climatic conditions of Western Europe. No supplemental lighting is employed.

Two to three weeks after treatment, each row of seedlings or plants is visually rated for growth injury or control due to all factors. Untreated flats of seedlings are used for comparison and their growth is considered zero percent injury. One hundred percent injury or growth control is equivalent to complete kill.

TABLE

PREEMERGENCE HERBICIDE TEST RESULTS

| Application Rate (kg/ha) | Percent Growth Control | | | | |
|---|---|---|---|---|---|
| | GALIUM APARINE | SUGAR | BARLEY | WHEAT | RAPE |
| 0.28 | 90 | 10 | 0 | 0 | 0 |
| 0.56 | 100 | 20 | 0 | 0 | 0 |
| 1.12 | 100 | 100 | 0 | 0 | 45 |
| 2.24 | 100 | 100 | 0 | 0 | 85 |

The compound of the present invention shows activity as herbicide in controlling the growth of undesirable vegetation when applied to such vegetation in pre- and post-emergence application. The compound is generally embodied in formulations which contain inert or occasionally active ingredients or diluent carriers in addition to the active compounds. Examples of such ingredients or carriers are water, organic solvents, surface active agents, oil, water-in-oil emulsions, wetting agents, dispersing agents, and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length.

The herbicidal compound can also be applied to the foliage in the form of a solution in a suitable solvent. Solvents frequently used in herbicidal formulations include kerosene, fuel oil, xylene, petroleum fractions with boiling ranges above xylene, and aromatic petroleum factions rich in methylated naphthalenes.

The most preferred formulations are emulsifiable concentrates which consist of an oil solution of the herbicide along with an emulsifying agent. Prior to use, the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above can be applied to the soil prior to emergence of vegetation, or to vegetation sought to be controlled in any conventional manner after the vegetation has emerged from the soil. The vegetation can be in any stage of development after emergence, ranging from seedlings to fully grown plants. Application can be achieved by any conventional technique such as the use of ground spraying equipment or aircraft-mounted sprayers. Various other application techniques will be apparent to one skilled in the pesticide art.

Other herbicide compounds can be used to form mixtures in conjunction with the S-benzyl-N,N-di-n-propyl thiolcarbamate of this invention. These include certain S-halobenzyl thiolcarbamates such as are described in US 3 846 115 A and US 3 582 314 A. Additionally, compounds such as methyl-2-[((4,6-dimethoxypyrimidine-2-yl)aminocarbonyl)aminosulfinyl-methyl]benzoate such as is manufactured by the

DuPont Company, Wilmington, Delaware under the designation DPX—F5384 can be used, as well as 2,4-dichlorophenoxy-acetic acid, commonly known as 2,4-D, and 2-methyl-4-chlorophenoxy-acetic acid, commonly known as MCPA and sold by the trade name Weedone MCPA ester by the Union Carbide Company, Boundbrook, New Jersey.

## Claims

1. A method for the control of Galium aparine weed species which comprises applying to the locus where control is desired an herbicidally effective amount of S-benzyl-N,N-di-n-propyl thiolcarbamate.

2. A method for the control of Galium aparine weed species which comprises applying to the locus where control is desired an herbicidally effective amount of a herbicidal composition comprising S-benzyl-N,N-di-n-propyl thiolcarbamate and an inert diluent carrier.

## Patentansprüche

1. Verfahren zur Bekämpfung von Unkraut der Gattung Galium Aparine, dadurch gekennzeichnet, daß man eine zur Hervorrufung der Herbizidwirkung ausreichende Menge an S-Benzyl-N,N-di-n-propylthiolcarbamat an der Stelle ausbringt, an der die Bekämpfung erfolgen soll.

2. Verfahren zur Bekämpfung von Unkraut der Gattung Galium Aparine, dadurch gekennzeichnet, daß man eine zur Hervorrufung der Herbizidwirkung ausreichende Menge einer Herbizidmischung, die aus S-Benzyl-N,N-di-n-propylthiolcarbamat und einem als Trägermaterial dienenden Streckmittel besteht, an der Stelle ausbringt, an der die Bekämpfung erfolgen soll.

## Revendications

1. Un procédé de contrôle de mauvaises herbes consistant en Galium aparine, qui consiste à appliquer au lieu où le contrôle est souhaité une quantité efficace du point de vue herbicide de thiolcarbamate de S-benzyl-N,N-di-n-propyle.

2. Un procédé pour le contrôle du développement de mauvaises herbes consistant en Galium aparine, qui consiste à appliquer au lieu où le contrôle est recherché une quantité efficace du point de vue herbicide d'une composition herbicide comprenant le thiolcarbamate de S-benzyl-N,N-di-n-propyle et un support ou diluant inerte.